# EUROPÄISCHE PATENTSCHRIFT

(11) **EP 0 991 713 B1**
(45) Veröffentlichungstag und Bekanntmachung des Hinweises auf die Patenterteilung: **16.04.2003**
(21) Anmeldenummer: 98922988.5
(22) Anmeldetag: 11.06.1998
(51) Int. Cl.: C08L 3/02, F42B 12/76, E01C 9/08

(54) **VERSCHLEISSARTIKEL IN DER WEHR- BZW. PYROTECHNIK SOWIE FALTFESTSTRASSEN, ÜBERFAHR- UND GEHHILFEN AUS BIOLOGISCH ABBAUBAREN WERKSTOFFEN**
DISPOSABLE ARTICLES FOR THE MILITARY OR PYROTECHNIC INDUSTRIES, NON-FOLDING ROADS, DRIVING OR WALKING AIDS MADE OF BIODEGRADABLE MATERIALS
ARTICLES JETABLES POUR LE DOMAINE MILITAIRE ET PYROTECHNIQUE, ROUTES NON PLIABLES, AIDES AU PASSAGE DE PERSONNES ET DE VEHICULES EN MATERIAUX BIODEGRADABLES

(30) Priorität: 20.06.1997 DE 29710826 U; 20.06.1997 DE 29710829 U
(43) Veröffentlichungstag der Anmeldung: 12.04.2000
(73) Patentinhaber: bio-tec Biologische Naturverpackungen GmbH & Co. KG, 46446 Emmerich (DE)
(72) Erfinder: LOERCKS, Jürgen, D-46453 Rees (DE); SCHMIDT, Harald, D-46446 Emmerich (DE)
(74) Vertreter: Troesch Scheidegger Werner AG
(86) Internationale Anmeldenummer: IB9800900
(87) Internationale Veröffentlichungsnummer: WO98058998

(56) Entgegenhaltungen:
- EP-A- 0 596 437
- WO-A-96/31561
- WO-A-97/48764
- DE-U- 29 710 826
- US-A- 5 448 951

## Beschreibung

Die vorliegende Erfindung betrifft im Freien verwendbare Gebrauchs- oder Einweg- bzw. Verschleissartikel, wie insbesondere Verschleissartikel in der Pyrotechnik bzw. in der Wehrtechnik, sowie flächige Fahr- bzw. Gehhilfen, insbesondere für das Abdecken von unwegsamem und/oder feuchtem Untergrund.

Eine grosse Anzahl von Gebrauchs- oder Einweg- bzw. Verschleissartikel sind bekannt, welche im Freien verwendet werden und nach Gebrauch oft nicht eingesammelt bzw. entsorgt werden oder deren Entsorgung mit grossem Aufwand verbunden ist.

Im militärischen, technischen und zivilen Anwendungsbereich werden sehr vielfältig insbesondere pyrotechnische Erzeugnisse sowie Munitionsbestandteile überwiegend unter Verwendung von Kunststoffen verwendet.

Bevorzugte Anwendungsbereiche und Beispiele sind
- Simulationsmunition, Übungspatronen, Manövermunition
- Feuerwerkskörper, -raketen, -knall, -blitzkörper
- Nebelkörper, Farbrauchkörper, Leucht- und Signalmittel
- sowie Verpackungssysteme (Behälter und Kisten) für Übungsmunition und -granaten

Die Kunststoffanteile der pyrotechnischen Erzeugnisse sind nach dem Gebrauch meist in der Landschaft verstreut und tragen so zur Umweltverschmutzung bei.

In militärischen und zivilen Anwendungsbereichen von sogenannten Faltefeststrassen und/oder Überfahr- und -gehhilfen benutzt man Systeme im wesentlichen aus Metall (Stahl, Aluminium), seltener aus Kunststoff, die die Befahrbarkeit und Begehbarkeit von unwegssamen Untergründen gewährleisten sollen.

Als tragfähige und wiederaufnehmbare Fahrbahnen oder Matten haben sich z.B. Systeme aus Sechseckplatten, hergestellt aus Stahl oder Aluminium, bewährt, die in einer Breite von z.B. 4,2 m breiten Faltstrassen mittels sogenannten Auffahrbänder von einem Transportfahrzeug aus verlegt werden. Weniger breite, begehbare Matten werden demgegenüber mehrheitlich aus Kunststoffen gefertigt.

Bevorzugte Anwendungsbereiche sind
- Herstellung von Zu- und Abfahrten
- Befestigung von Ufer- und Strandflächen
- Befestigung von sonst unbefahrbarer oder unbegehbarer, sumpfiger oder schlammiger Untergründe für militärische und zivile Verwendungen, z.B. Messebau, Behelfsparkplätze, Zeltbau bei Grossveranstaltungen, Flugplätze etc.
- Gehwege in nassen oder unwegsamen Gebieten.

Die bekannten Seckseckplatten sind so konstruiert, dass sie ineinander verhakt zu breiten Strassen als ab- und aufrollbares System zur Verfügung gestellt werden können.

Dabei besitzen die Sechseckplatten aus Stahl ein Gewicht von 23 kg bei einer Fläche von 0,25 m², aus Aluminiumdruckguss von 10 kg und aus Kunststoffen (z.B. Recyclingkunststoffe, PU-Kunststoffe) 3 bis 5 kg. Alle Systeme haben gemeinsam, dass sie vorteilhaft in einem Verlegesystem als Faltefeststrasse schnell ausgelegt werden können. Nach der Belastung mit schwerem Gerät, wie beispielsweise Raupen- bzw. Panzerfahrzeugen, hat sich aber gezeigt, dass die Wiederaufnahme sehr schwierig ist, weil die einzelnen Segmente durch die Belastungen verzogen sind. Eine mehrmalige Verwendung ist daher nur ausnahmsweise möglich.

Eine ähnliche Problematik ergibt sich bei der Verwendung von Kunststoff-Matten als Gehhilfen, beispielsweise in Feuchtgebieten, auf Baustellen, im Gartenbau oder kurz in unwegsamem Gebiet. Derartige Kunststoff-Matten oder einzelne KunststoffPlatten sind meistens nach deren Verwendung aufgrund grösster Verschmutzung und auch aufgrund mechanischer Beschädigungen nicht mehr verwendbar, so dass sie entsorgt werden müssen. Oft kommt es auch vor, dass bei Verwendung in unwegsamem Gebiet derartige Matten "in Vergessenheit" geraten und so in der freien Natur vor sich her fristen, ohne je entsorgt zu werden.

Für die Herstellung von Wegwerfartikeln in der Wehrtechnik sind eine Reihe von Vorschlägen aus dem Stand der Technik bekannt, welche Lösungsansätze für die oben erwähnte Problematik aufweisen. So beschreibt die US 3 770 536 Patronenhülsen auf Zellulosebasis, d.h. es werden Wegwerf-Patronenhülsen aus Zelluloseester vorgeschlagen. In der GB 457 294 werden Patronenhülsen auf Basis von Zellulosederivaten vorgeschlagen. In der DE 27 14 545 wird vorgeschlagen, pyrotechnische Artikel auf Basis von Polyvinylalkohol herzustellen. Die US 5 549 048 beschreibt Mischungen aus Stärke und Olefin sowie einem Antioxidans-Zusatz für das Herstellen von Patronenhülsen, wobei die Polymermischung während dem "Abfeuern" derart "aktiviert" wird, dass die Polymermischung zerfällt. In der EP 554 816 werden Hülsen oder Feuerwerkskörperkappen aus Zellstoff, Altpapier sowie nativer Stärke vorgeschlagen, wobei aus den erwähnten Materialien ein verrottbares Pappmaché hergestellt wird. Die EP 0 775 724 beschreibt Patronenhülsen aus einer thermoplastischen Mischung, bestehend aus Polyester, nativer Stärke und einem Oxidierungsmittel (TiO₂). In den beiden japanischen Patent Abstracts 06213597 und 08219693 werden Hülsen und Geschosse aus nativer Stärke sowie Polyvinylalkohol vorgeschlagen.

Allen erwähnten Lösungsansätzen, bekannt aus dem Stand der Technik, ist gemeinsam, dass sie entweder Formkörper ergeben mit nicht ausreichenden mechanischen Eigenschaften für die Herstellung der wehrtechnischen oder pyrotechnischen Artikel, oder aber die biologische Abbaubarkeit ist nicht ausreichend.

Im Zusammenhang mit Abdeckungen, Fahr- und Gehhilfen im Freien werden in der JP-08/256974 Copolymere aus Milchsäure für Anwendungen im Bereich Landwirtschaft, Forstwesen und Bauingenieurwesen vorgeschlagen. In der EP-0 672 772 wird die Herstellung von Fliesen, ggf. im Verbund mit weiteren Kunststoffen, z.B. für die Verfestigung von Böschungen und dergleichen beschrieben. Zum Beispiel Matten aus auf Stärke basierenden Polymeren, verstärkt mit z.B. Jute, Kokos, Flachs und dergleichen. In der EP-0 687 711 werden Faserverbundwerkstoffe beschrieben. Als Anwendungen kommen Strukturbauteile in Frage, wie beispielsweise im Fahrzeuginnenausbau. In der Zusammenfassung der japanischen Patentanmeldung JP-08/027298 wird eine Art Gehhilfe bzw. Matten beschrieben als Schutz für Wiesen, bis das Gras ausreichend angewachsen bzw. sich die Wiese ausreichend gefestigt hat.

Die in diesen Dokumenten beschriebenen Lösungsansätze betreffen wohl im Freien auszulegende Matten und Fliese, kein Vorschlag ist aber dergestalt, dass er eine Lösung für das Ausbilden von Fahr- oder Gehhilfen miteinschliesst. Insbesondere die aus dem Stand der Technik beschriebenen Wiesenschutzmatten dürften wohl kaum als Fahr- oder Gehhilfen in Frage kommen.

Es ist deshalb eine Aufgabe der vorliegenden Erfindung, eine Lösung für die oben geschilderte Problematik anzubieten. Einerseits sind die eingangs erwähnten Verschleissartikel in der Wehrtechnik und in der Pyrotechnik, welche in der Vergangenheit aus synthetischen Kunststoffen hergestellt wurden, derart auszurüsten bzw. mittels alternativen Materialien herzustellen, dass die geschilderte Umweltproblematik gelöst werden kann. Andererseits sind die erwähnten Überfahrhilfen, Gehhilfen und dergleichen aus geeigneten Materialien zu fertigen, ohne dass die Entsorgung der schlussendlich verbrauchten Fahrhilfen, Matten und dergleichen problematisch ist.

Als Lösung für diese existierende Problematik wird die erfindungsgemässe Verwendung von biologisch abbaubaren Kunststoffen, vorzugsweise auf der Basis nachwachsender Rohstoffen als Werkstoff vorgeschlagen. Der Vorteil besteht einerseits darin, dass die pyrotechnischen Erzeugnisse selbstverständlich wie gewohnt funktionieren, nach dem Gebrauch aber nicht wieder durch kosten- und zeitintensive Arbeiten eingesammelt werden müssen, wenn das überhaupt möglich ist, sondern an Ort und Stelle verbleiben und im Laufe der Zeit biologisch vollständig wieder abgebaut werden. Zudem funktionieren die ausgebrachten Befestigungen von unwegsamen Untergründen selbstverständlich wie gewohnt, müssen nach dem Gebrauch aber nicht wieder durch kostenund zeitintensive Arbeiten aufgenommen werden, sondern können an Ort und Stelle verbleiben und im Laufe der Zeit biologisch vollständig wieder abgebaut werden, so dass nachher der ursprüngliche Zustand der Natur wiederhergestellt wird.

Für weniger stark belastete Wege, die im wesentlichen von Fussgängern, Radfahrern oder auch z.B. Reitern benutzt werden und durch feuchtes, matschiges oder sumpfiges Gelände führen, werden Beläge aus biologisch abbaubarem Material verwendet, die als sogenannte Flachfolie hergestellt werden. Diese Flachfolien mit einer Stärke von 1 - 25 mm werden als Rollenware oder als Platten hergestellt. Die Oberfläche wird durch Prägungen oder Stanzungen in der Rutschfestigkeit sowohl gegen den Untergrund als auch für die Begehbarkeit entsprechend aufgerauht. Vorteilhaft ist auch für diese Anwendung, dass die Beläge aus biologisch abbaubaren Materialien sehr gut wasserdampfdurchlässig sind und so die Durchtrocknung des Untergrundes fördern, was bei Kunststoffbelägen nicht der Fall ist. Die erfindungsgemässen Beläge können auch als mehrschichtige Flachfolien oder Folienverbunde ausgeführt sein.

Geeignete biologisch abbaubare Kunststoffe sind aus nachfolgend aufgeführten Biopolymeren herstellbar:
- Werkstoffe, die auf natürlichen Polymeren basieren und deren Syntheseleistung von der Natur erbracht werden, z.B. Stärke, Gelatine, Lignin, Cellulose;
- Werkstoffe, die auf natürliche Monomere basieren und biochemisch polymerisiert werden, z.B. Polylactide, Polyhydroxybuttersäure und Copolymere mit Valeriansäure und/oder fermentativ hergestellte Polyester.
- Werkstoffe, deren Monomere auf Basis fossiler Rohstoffe basieren, synthetisch hergestellt und chemisch polymerisiert werden, z.B. abbaubare Polyester und Copolyester, Polyesteramide, Polyesterurethane, Polyvinylalkohol, Ethylenvinylalkohol;
- Werkstoffe, die aus Mischungen, Blends und/oder Reaktionsprodukten der vorgenannten Rohstoffgruppen bestehen.

Die erfindungsgemässen wehrtechnischen und pyrotechnischen Erzeugnisse sowie Faltfeststrassen und Überfahr- oder Gehhilfen auf der Basis biologisch abbaubaren Werkstoffe haben aber gemeinsam, dass sie vollständig biologisch abbaubar sind, d.h. unter Kompostierbedingungen, wie diese in der DIN 54900 definiert sind, und in CO₂, Wasser und Biomasse als Stoffwechselendprodukt des biochemischen Kompostierungsprozesses zerfallen.

Insbesondere geeignet sind biologisch abbaubare Werkstoffe auf der Basis von Stärke.

Im übrigen wird auf den Wortlaut der abhängigen Ansprüche verwiesen, deren Inhalt integraler Bestandteil der vorliegenden Beschreibung ist.

Die entwicklungsgemässe Herstellung der Erzeugnisse auf der Basis des nachwachsenden Rohstoffes Stärke basiert auf der Erfindung der thermoplastischen Stärke und deren Polymermischungen sowie auf weiteren abbaubaren Polymerkomponenten, wie aliphatische Polyester, wie beispielsweise Polymilchsäure oder Polycaprolacton, massgeschneiderten Copolyester aus aliphatischen Diolen und aliphatischen wie aromatischen Dicarbonsäuren, abbaubaren Polyesteramiden, Polyesterurethanen, Polyvinylalkohol, Celluloseester oder -ether, Polyethylenoxidpolymer und/oder Mischungen davon, welche weitere abbaubare Polymerkomponenten gegebenenfalls durch Mischen mit thermoplastischer Stärke in der wasserfreien Schmelze durch Esterreaktionen und/oder als Polymerkombinationen neue abbaubare Polymerwerkstoffe mit hohem Anteil an nachwachsenden Rohstoffen bilden, welche nach DIN 54900 kompostierbar sind. Weitere natürliche Additive sind Zuschlagstoffe und Plastifizierungsmittel, wie beispielsweise Glyzerin und deren Derivate, mehrwertige Zuckeralkohole, wie Sorbitol und deren Derivate sowie Glycerinacetate.

In der EP 397 819 wird erstmals ein Verfahren zur Herstellung von thermoplastischer Stärke - TPS - definiert sowie was unter dem neuen Stärkewerkstoff - TPS - zu verstehen ist und welche gravierenden Unterschiede, insbesondere in der Kunststoffverarbeitungstechnologie, zur seit längerem bekannten destrukturierten Stärke bestehen.

Die Herstellung der thermoplastischen Stärke erfolgt unter Zuhilfenahme eines Quell- oder Plastifizierungsmittels nicht nur ohne Zugabe von.Wasser, sondern vielmehr unter Verwendung von trockener bzw. getrockneter Stärke und/oder Stärke, die durch Entgasung vor oder bei der Verarbeitung auf einem Feuchtigkeitsgehalt von weniger als 5 Gew.% getrocknet wird. Stärken enthalten als native Stärken handelsüblich 14% Wasser, Kartoffelstärke sogar 18% natürliche Feuchtigkeit als Ausgleichsfeuchte, welche Feuchtigkeit, wie vorgeschlagen, mindestens teilweise zu entfernen ist.

Wenn eine Stärke mit mehr als 5% Feuchtigkeit unter Druck und Temperatur plastifiziert bzw. verkleistert wird, entsteht immer eine destrukturierte Stärke und der Herstellvorgang der destrukturierten Stärke ist endotherm. Der Herstellvorgang der thermoplastischen Stärke ist dagegen ein exothermer Vorgang, denn die im wesentlichen wasserfreie (< 5%), native Stärke wird in einem Extrusionsprozess mit einem Zuschlagstoff/Plastifiziermittel (z.B. Glycerin, Glycerintriacetat, Sorbitol), der die Schmelztemperatur der Stärke erniedrigt, homogenisiert und durch Zuführung von mechanischer Energie und Wärme in einem Temperaturbereich von 100 - 300°C geschmolzen. Zudem betragen die kristallinen Anteile bei der TPS weniger als 5%, wobei die kristallinen Anteile unverändert bleiben. Bei destrukturierter Stärke sind die kristallinen Anteile unmittelbar nach der Herstellung ebenfalls gering, doch nehmen diese bei Lagerung von destrukturierter Stärke wieder zu. Dieses Merkmal widerspiegelt sich auch im Glasumwandlungspunkt, welcher bei thermoplastischer Stärke bei minus 40°C verbleibt, während vergleichsweise er bei destrukturierter Stärke wieder auf über 0°C ansteigt. Aus diesen Gründen wird destrukturierte Stärke und Werkstoffe auf Basis destrukturierter Stärke bei Lagerung allmählich relativ spröde.

Bei der Herstellung der Polymermischungen auf Basis von Stärke, wie vorzugsweise thermoplastischer Stärke, werden Phasenvermittler für die Homogenisierung der hydrophilen und polaren Stärke-Polymerphase und der hydrophoben und unpolaren Polymerphase verwendet, die entweder zugefügt werden oder vorzugsweise bei der Herstellung der Polymermischung in situ entstehen. Als Phasenvermittler werden Blockcopolymere verwendet, die u.a. in der WO 91/16375, EP 0 539 544, US 5 280 055 und EP 0 596 437 ausführlich beschrieben sind. Die intermolekulare Compoundierung dieser unterschiedlichen Polymeren erfolgt unter definierten Temperatur- und Scherbedingungen zu verarbeitungsfähigen Granulaten. Diese thermoplastischen Blends werden durch Ankopplung der Phasengrenzflächen zwischen den wenig verträglichen Polymeren technologisch so hergestellt, dass die Verteilungsstruktur der dispersen Phase bei der Verarbeitung durch das optimale Verarbeitungsfenster (Temperatur- und Scherbedingungen) erreicht wird. Durch diese Verfahrensparameter wird eine permanente Umlagerung der Molkularstruktur zu thermoplastischer Stärke bzw. zu Stärkederivaten mit einem Substitutionsgrad von ca. 0,8 oder mehr erzeugt. Es ist aber auch möglich, dass Polymere, wie z.B. Polyesteramide, aliphatische Polyester und Co-Polyester sowie eine Reihe weiterer nachfolgend definierter Polymere diese Funktion übernehmen können.

Damit ergibt sich nun der gewichtige Vorteil, dass bei der Herstellung, insbesondere von Polymermischungen, basierend auf - TPS - nicht zwingend zunächst die -TPS - durch Umwandlung aus nativer Stärke mit einem niedermolekularen Plastifiziermittel hergestellt werden muss, bevor das weitere Polymer dazu dosiert wird, sondern dass quasi in einem Arbeitsgang durch Mischen von nativer Stärke oder Stärkederivate mit dem zusätzlichen abbaubaren hydrophoben Polymer unter trockenen Bedingungen in der Schmelze die Polymermischung hergestellt werden kann, wobei die darin enthaltene Stärke thermoplastisch verarbeitbar ist. Damit entfällt die Notwendigkeit des zunächst Zumischens eines niedermolekularen Plastifiziermittels, wie z.B. Glycerin. Als geeignete hydrophobe abbaubare Polymere erweisen sich besonders aliphatische Polyester, Polyestercopolymere, Polyesteramide, Polyesterurethane und/oder Mischungen davon. Besonders Copolymere Polyester und Polyesteramide zeigen sehr vorteilhafte Eigenschaftsverbesserungen der Stärkepolymerwerkstoffe auf, die besonders die hydrophoben Eigenschaften positiv beeinflussen. Durch die intermolekulare Ankopplung an die Stärkepolymerphase und die homogene Verteilung der Polymerteilchen wird Einfluss genommen auf die physikalischen Eigenschaften. Insbesondere die hydrophoben Eigenschaften der Stärke-Kunststoffe werden erheblich gesteigert. Die Feuchtigkeitsresistenz wird verbessert und die Versprödungstendenzen der Stärke - TPS-Kunststoffe deutlich abgesenkt. Daneben eigenen sich aber auch aliphatische Polyester und Polyesterurethane für die Umwandlung der nativen Stärke in - TPS -, wobei gleichzeitig die genannten Polymere als Mischkomponenten zur - TPS - für die Herstellung von biologisch abbaubaren Polymermischungen verwendet werden können und den Phasenvermittler durch Umesterung in situ bilden.

Geeignete biologisch abbaubare Werkstoffe zur Herstellung von Segmenten der Faltfeststrassen, Überfahrhilfen, Gehwegmatten, Zeltböden, etc. sind PLA, Polyester, Polyesteramide, Cellulosederivate und besonders Polymermischungen auf der Basis des nachwachsenden Rohstoffes Stärke, die beispielsweise in den Patenten und Patentanmeldungen der BIOTEC beschrieben sind, besonders in:
EP 539 544
EP 542 155
PCT/EP 93/117 666
WO 95/04104
WO 96/19599
WO 96/31561
WO 97/48764

Die Inhalte der genannten Patent-Druckschriften gelten hiermit als integraler Bestandteil der vorliegenden Erfindung.

Die erfindungsgemässen Verschleiss- und Verpackungsteile aus der Wehr- und Pyrotechnik, beispielsweise Hülsen und Projektile, werden in einem Spritzgussverfahren aus den biologisch abbaubaren Werkstoffen hergestellt. Sie enthalten, wenn erforderlich, Fasern und/oder Füllstoffe wie Kreide, Kalk, Kaolin, Titandioxid und ggf. Pigmente und Hilfsstoffe als Materialschutz, wie Konservierungsmittel, Stabilisatoren, UV-Schutz und andere Hilfsmittel, wenn die Materialeigenschaften, Oberflächenstruktur und -eigenschaften verändert werden sollen.

So wird heute beispielsweise die Manöverpatrone 7,62 mm x 51, DM 28A1B2 im Spritzgussverfahren aus dem Ausgangswerkstoff vernetztes PE hergestellt mit einem Schmelzindex MFI 190°C/5 kg nach DIN 53 735 max. 2,5 g/10' und einem Schmelzpunkt von 120°C.

Werkstoffeigenschaften von vernetztem Polyethylen sind:
Zugfestigkeiten > 29 N/mm (DIN 53 504)
Bruchdehnung > 150 % (DIN 53 455)

Vernetztes Polyethylen ist aber nicht biologisch abbaubar.

Dieses Eigenschafts-Anforderungsprofil wird erfüllt vom nachfolgend beispielsweise aufgeführten biologisch abbaubaren Polymerblend (Beispiel 1) vorzugsweise auf Stärkebasis.

Die nachfolgend angeführten Beispiele dienen lediglich zum besseren Verständnis der vorliegenden Erfindung, und die Liste möglicher Anwendungen liesse sich selbstverständlich x-beliebig erweitern bzw. ergänzen.

### Beispiele:

In einem Spritzgussverfahren wurden die Manöverpatrone 7,62 mm x 5,1, DM 28A1B2 bei 170°C und erhöhtem Druck aus biologisch abbaubarem Werkstoff folgender Zusammensetzung im Beispiel 1 hergestellt:

### Beispiel 1:

BIOFLEX (Marke der Firma Bio-tec, Biologische Naturverpackungen GmbH, D-46446 Emmerich) Polymerblend auf der Basis von TPS.
TPS = 51,6 Gew%, Cellulosediacetat 48,4 Gew%
MFI 190°C / 5 kg, nach DIN 53 735 = 2,4 g/ 10'

### Beispiel 2:

BIOFLEX GF 102/20, Polymerblend auf der Basis von TPS zur Herstellung von spritzgegossenen Hülsen für Feuerwerkskörper.
TPS auf Basis Maisstärke = 39,5 % + Polyactid Lacea H 100 J
(Mitsui Toatsu) = 60,5 %.

### Beispiel 3:

BIOFLEX GF 102/21, Polymerblend auf der Basis von TPS zur Herstellung von Munitions-Verpackungs-Behältern.
TPS auf Basis Kartoffelstärke = 31,8 %
+ Polyesteramid Bayer BAK 1095 = 68,2 %.

Wie erwähnt, dienen die oben angeführten Beispiele zur näheren Erläuterung und ergänzend seien noch weitere Beispiele von möglichen Verschleissartikeln in der Wehr- oder Pyrotechnik angeführt, welche aus biologisch abbaubaren Polymeren der erfindungsgemäss definierten Art hergestellt werden können:
- Gewehrmunition bzw. Artilleriemunition bzw. Munitionsteile davon, wie insbesondere Simulationsmunition, Übungspatronen, Manövermunition, Hülsen, Hüllen, Projektile, Patronenhülsen, Patronenkörper, Zünderhülsen, Treibstoffladungshülsen usw.
- Feuerwerkskörper, -raketen, Knall- und Blitzkörper, Treibladhülsen dazu usw.
- Nebelkörper, Farbrauchkörper, Leucht- und Signalmittel und dergleichen.
- Verpackungssysteme wie Behälter und Kisten, Hüllen, Munitionsschachteln; Verpackungen für Übungsmunition und Granaten usw. usw.

Die angeführte Liste ist nicht abschliessend und kann x-beliebig ergänzt oder erweitert werden.

Insbesondere in bezug auf die Projektile ist ergänzend anzuführen, dass diese, obwohl üblicherweise aus Blei bzw. Bleilegierungen hergestellt, ebenfalls aus den erfindungsgemäss vorgeschlagenen biologisch abbaubaren Werkstoffen hergestellt werden können. Dabei enthalten diese Projektile vorzugsweise metallische oder nichtmetallische pulverförmige Füllstoffe, wobei der verwendete Füllstoff entweder inert oder besonders umweltverträglich ist, so dass die von den schwermetallhaltigen Projektilen ausgehende Umweltbelastung vermieden wird. Ausserdem sind thermoplastisch verformbare Projektile hinsichtlich optimaler aerodynamischer und balistischer Formgebung im Vorteil. Ein solches erfindungsgemässes Projektil, welches durch einen biologisch abbaubaren Werkstoff gebunden ist, zerfällt nach dem Gebrauch im Laufe der Zeit durch den biologischen Abbau des verwendeten Werkstoffes und das restliche Pulver stellt in der Regel keine Umweltverunreinigung dar.

Erfindungsgemässe Segmente (Sechseckplatten für Faltfeststrassen beispielsweise) werden in einem Spritzgussverfahren aus dem BAW-Werkstoffen hergestellt. Sie enthalten wenn erforderlich Fasern und/oder Füllstoffe wie Kreide, Kalk, Kaolin, Titandioxid und ggf. Pigmente und Hilfsstoffe als Materialschutz wie Konservierungsmittel, Stabilisatoren, UV-Schutz und andere Hilfsmittel, wenn die Oberflächenstruktur und -eigenschaften verändert werden sollen. Segmente, Platten und Überfahrhilfen aus Biokunststoffen besitzen eine hohe Wasserdampfdurchlässigkeit (> 500 g/m² d), die für feuchte Untergründe vorteilhaft sind, da sie schneller austrocknen können.

Für die Herstellung von begehbaren Matten, Zeltböden und dergleichen ist es aber auch möglich, diese mittels Extrusion herzustellen.

Die nachfolgend angeführten Beispiele beziehen sich auf mittels Spritzgussverfahren hergestellte Faltstrassen-Segmente, wobei die dafür verwendeten, biologisch abbaubaren Kunststoffe bei 170°C und erhöhtem Druck aus biologisch abbaubaren Werkstoffen folgender Zusammensetzung hergestellt worden sind:

### Beispiel 4:

BIOFLEX GS 902, Polymerblend auf der Basis von TPS = 37,6 %,
Cellulosediacetat 46,8 %, PLC = 15,6 %

### Beispiel 5:

BIOFLEX GF 102/20, Polymerblend auf der Basis von TPS auf Basis
Maisstärke = 39,5 % + Polylactid Lacea H 100 J (Mitsui Toatsu)
= 60,5 %.

### Beipiel 6:

BIOFLEX GF 102/21, Polymerblend auf der Basis von TPS auf Basis
Kartoffelstärke = 31,8 % + Polyesteramid Bayer BAK 1095 =
68,2%.

### Beispiel 7:

BIOFLEX GS 902 wird auf einer Flachfolienanlage als Rollenware hergestellt, geprägt und als Rollenware oder Platten konfektioniert.

TPS auf der Basis von Kartoffelstärke 37,6 Gew. Anteile Cellulosediacetat, 46,8 Gew. Anteile PCL, 15,6 Gew. Anteile TPS.

(BIOFLEX = eingetragenes Warenzeichen der Firma Bio-tec Biologische Naturverpackungen GmbH, D46446 Emmerich)

TPS = thermoplastische Stärke gemäss EP 0 397 819 mit plastifizierenden Zuschlagstoffen. Wie eingangs erwähnt, kann es sich bei diesem plastifizierenden Zuschlagstoff sowohl um eine niedermolekulare Substanz handeln, wie beispielsweise Glycerin oder Sorbitol, oder aber auch um Polymere-Komponenten, welche durch im wesentlichen wasserfreies Mischen mit nativer Stärke in der Schmelze Veresterungsreaktionen eingehen können.

Die vorliegende Erfindung ist selbstverständlich keinesfalls auf Faltstrassen bzw. Faltfeststrassen beschränkt, sondern mittels den erfindungsgemäss definierten, biologisch abbaubaren Polymeren ist es möglich, für die nachfolgend aufgelisteten Anwendungen oder für Teile davon verwendet zu werden:

Faltstrassen, Faltfeststrassen, Überfahrhilfen, Bodenmatten, Zelt- bzw. Campingmatten, Gehweghilfen, Gehwegmatten, Behelfsstrassen, Bodenplatten, Hilfsmatten für Gartenbau und auf Baustellen, Wegmatten in Nassgebieten und auf Golfplätzen, etc. sowie Bestandteile für alle die genannten Anwendungen.

Dabei ist zu betonen, dass die oben angeführte Liste keinesfalls abschliessend ist und auf x-beliebige Art und Weise ergänzt werden kann. Wesentlich ist ja, dass bei im Freien verwendeten pyrotechnischen und wehrtechnischen Verschleissartikeln sowie Folien, Matten, Teppiche, Platten usw., welche nur beschränkt wiederholt oder gar einmalig verwendet werden und nach Gebrauch entsorgt werden müssen, die Problematik der Entsorgung entfällt, da sie aus einem biologisch abbaubaren bzw. verrottbaren Material gefertigt sind. Als biologisch abbaubares Material, geeignet für die erfindungsgemäss vorgeschlagenen Verschleissartikel, werden eine Reihe von auf natürlichen sowie synthetischen Monomeren basierende Polymere vorgeschlagen, welche nach DIN 54900 biologisch abbaubar bzw. kompostierbar sind. Dabei kann es sich sowohl um Polymere handeln, wie insbesondere in den Ansprüchen 1 und folgende definiert, um Mischungen davon und vorzugsweise um Mischungen mit Stärke in Form von thermoplastischer oder destrukturierter Stärke. Dabei ist es aber wichtig, dass bei Gebrauch diese Artikel sowie Matten, Platten, Teppiche usw. über die notwendige Festigkeit bzw. Stabilität verfügen, so dass sie eine echte Alternative zur Verwendung von Metall oder synthetischen Kunststoffen darstellen, welche die eingangs erwähnte Umweltproblematik mit sich bringen.

## Patentansprüche

1. Verwendung mindestens eines biologisch abbaubaren Polymers oder einer Polymermischung für die Fertigung wenigstens von Teilen eines Verschleissartikels in der Pyrotechnik bzw. in der Wehrtechnik oder für die Fertigung wenigstens von Teilen einer flächigen Fahr- bzw. Gehhilfe für das Abdecken von unwegsamem und/oder feuchtem Untergrund, **dadurch gekennzeichnet, dass** das biologisch abbaubare Polymer oder die Mischung erhältlich ist durch Mischen in der Schmelze von thermoplastischer Stärke, oder Derivaten davon mit mindestens einer Polymerkomponente, welche auf natürlichen Monomeren basiert und erhältlich ist durch biochemische Polymerisation, ausgewählt aus der Gruppe von Polylactiden, Polyhydroxibuttersäure sowie Copolymere mit Valariansäure und/oder fermentativ hergestellten Polyestern und/oder einer Polymerkomponenten, welche auf Monomeren auf Basis fossile Rohstoffe basiert und erhältlich ist durch synthetische bzw. chemische Polymerisation, ausgewählt aus der Gruppe von abbaubaren Polyestern und Copolyestern, Polyesteramiden, Polyesterurethanen, Polyvinylalkohol, Ethylenvinylalkohol und/oder Mischungen davon, bei einem Wassergehalt von < 1 Gew.%, wobei die thermoplastische Stärke zunächst aus nativer Stärke oder Derivaten davon durch Mischen in der Schmelze mit Glycerin, Glycerinacetat und/oder Sorbitol oder einem anderen geeigneten niedermolekularen Plastifiziermittel erhältlich ist, bei einem Wassergehalt von < 5 Gew.%.

2. Verwendung nach Anspruch 1, **dadurch gekennzeichnet, dass** das biologisch abbaubare Polymer oder die Mischung mindestens eine der nachfolgenden Polymerkomponenten enthält oder erhältlich ist durch Mischen in der Schmelze von thermoplastischer Stärke. oder Derivaten davon mit mindestens einer der nachfolgenden Polymerkomponenten:
- ein aliphatischer Polyester,
- ein Copolyester mit aliphatischen und aromatischen Blöcken, .
- ein Polyesteramid,
- Polyvinylalkohol,
- ein Polyesterurethan,
- und/oder Mischungen davon,
wobei das Mischen mit der Stärke bei einem Wassergehalt von < 1 Gew.% zu erfolgen hat und wobei die thermoplastische Stärke zunächst aus nativer Stärke oder Derivaten davon durch Mischen in der Schmelze mit Glycerin, Glycerinacetat und/oder Sorbitol oder einem anderen geeigneten niedermolekularen Plastifiziermittel erhältlich ist, bei einem Wassergehalt von < 5 Gew.%.

3. Verwendung nach einem der Ansprüche 1 oder 2, **dadurch gekennzeichnet, dass** das biologisch abbaubare Polymer bzw. die Mischung weiter Gelatine, Lignin, Cellulose, Derivate der vorgenannten Materialien und/oder Mischungen davon enthält.

4. Verwendung nach einem der Ansprüche 1 bis 3, **dadurch gekennzeichnet, dass** das biologisch abbaubare Polymer bzw. die Mischung mindestens ein Polymer aus der nachfolgeden Aufzählung enthält:
Aliphatische und teilaromatische Polyester aus
A) linearen bifunktionellen Alkoholen aus der Gruppe Ethylenglycol, Hexadiol oder Butandiol und/oder cycloaliphatischen bifunktionellen Alkoholen, und zusätz-lich geringen Mengen höherfunktionellen Alkoholen, aus der gruppe 1,2,3-Propantriol oder Neopentylglycol sowie aus linearen bifunktionellen Säuren aus der Gruppe Bernsteinsäure oder Adipinsäure und/oder cycloaliphatischen bifunktionellen Säuren, und/oder aromatischen bifunk-tionellen Säuren, aus der Gruppe Terephthalsäure, Isophthalsäure oder Naphthalindicarbonsäure und geringen Mengen höherfunktionellen Säuren, oder
B) aus säure- und alkoholfunktionalisierten Bausteinen, aus der Gruppe Hydroxybuttersäure oder Hydroxyvaleriansäure oder deren Derivaten,
oder einer Mischung oder einem Copolymer aus A und B,
wobei die aromatischen Säuren nicht mehr als 50 Gew.% Anteil, bezogen auf alle Säuren, ausmachen;
liphatische Polyesterurethane aus
C) einem Esteranteil aus linearen bifunktionellen Alkoholen, aus der Gruppe Ethylenglycol, Butandiol, Hexandiol, Butandiol, und/oder cycloaliphatischen bifunktionellen Alkoholen, und geringen Mengen höherfunktionellen Alkoholen, aus der Gruppe 1,2,3-Propantriol oder Neopentylglycol sowie aus linearen bifunktionellen Säuren, aus Gruppe Bernsteinsäure oder Adiphinsäure und/oder cycloaliphatischen und/oder aromatischen bifunktionellen Säuren, aus der Gruppe Cyclohexandicarbonsäure und Terephthalsäure und geringen Mengen höherfunktionellen Säuren, oder
D) aus einem Esteranteil aus säure- und alkoholfunktionalisierten Bausteinen, aus der Gruppe Hydroxybuttersäure und Hydroxyvaleriansäure, oder deren Derivaten,
oder einer Mischung oder einem Copolymer aus C) und D), und
E) aus dem Reaktionsprodukt von C) und/oder D) mit aliphatischen und/oder cycloaliphatischen bifunktionellen und höherfunktionellen Isocyanaten, aus der Gruppe Tetramethylendiisocyanat, Hexamethylendiisocyanat, Isophorondiisocyanat, gegebenenfalls zusätzlich mit linearen und/oder cycloaliphatischen bifunktionellen und/oder höherfunktionellen Alkoholen, aus der Gruppe Ethylenglycol, Butandiol, Hexandiol, Neopentylglycol, Cyclohexandimethanol,
wobei der Esteranteil C) und/oder D) mindestens 75 Gew.%, bezogen auf die Summe aus C, D) und E) beträgt;
Aliphatisch-aromatische Polyestercarbonate aus
F) einem Esteranteil aus linearen bifunktionellen Alkoholen, aus der Gruppe Ethylenglykol, Butandiol, Hexandiol, Butandiol, und/oder cycloaliphatischen bifunktionellen Alkoholen, und geringen Mengen höherfunktionellen Alkoholen, aus der Gruppe 1,2,3-Propantriol oder Neopentylglycol sowie aus linearen bifunktionellen Säuren, aus der Gruppe Bernsteinsäure oder Adipinsäure und/oder cycloaliphatischen bifunktionellen Säuren, und geringen Mengen höherfunktionellen Säuren oder
G) aus einem Esteranteil aus säure- und alkoholfunktionalisierten Bausteinen, aus der Gruppe Hydroxybuttersäure oder Hydroxyvaleriansäure oder deren Derivaten,
oder einer Mischung oder einem Copolymer aus F) und G) und
H) einem Carbonatanteil, der aus aromatischen bifunktionellen Phenolen, und Carbonat-spendern, hergestellt wird,
wobei der Esteranteil F) und/oder G) mindestens 70 Gew.%, bezogen auf die Summe aus F), G) und H) beträgt;
Aliphatische Polyesteramide aus
I) einem Esteranteil aus linearen und/oder cycloaliphatischen bifunktionellen Alkoholen, aus der Gruppe Ethylenglycol, Hexandiol, Butandiol, Butandiol, Cyclohexandimethanol, und geringen Mengen höherfunktionellen Alkoholen, aus der Gruppe 1,2,3-Propantriol oder Neopentylglycol, sowie aus linearen und/oder cycloaliphatischen bifunktionellen Säuren, aus der Gruppe Bernsteinsäure, Adipinsäure, Cyclohexandicarbonsäure, Adipinsäure und geringen Mengen höherfunktioneller Säuren, oder
K) aus einem Esteranteil aus säure- und alkoholfunktionalisierten Bausteinen, aus der Gruppe Hydroxybuttersäure, oder Hydroxyvaleriansäure, oder deren Derivaten,
oder einer Mischung oder einem Copolymer aus I) und K), und
L) einem Amidanteil aus linearen und/oder cycloaliphatischen bifunktionellen und geringen Mengen höherfunktionellen Aminen, aus der Gruppe Tetramethylendiamin, Hexamethylendiamin, Isophorondiamin, sowie aus linearen und/oder cycloaliphatischen bifunktionellen und geringen Mengen höherfunktionellen Säuren, aus der Gruppe Bernsteinsäure oder Adipinsäure, oder
M) aus einem Amidanteil aus säure- und aminfunktionalisierten Bausteinen, aus der Gruppe Σ-Laurinlactam und Σ-Caprolactam,
oder einer Mischung aus L) und M) als Amidanteil, wobei
der Esteranteil I) und/oder K) mindestens 30 Gew.%, bezogen auf die Summe aus I), K), L) und M) beträgt.

5. Verwendung nach einem der Ansprüche 1 bis 4, **dadurch gekennzeichnet, dass** das biologisch abbaubare Polymer bzw. die Mischung mindestens Stärke in Form von thermoplastischer Stärke enthält und als Plastifizier- oder Quellmittel der Stärke mindestens ein Polymer aus der Aufzählung gemäss Anspruch 4.

6. Verwendung nach einem der Ansprüche 1 bis 5, **dadurch gekennzeichnet, dass** das biologisch abbaubare Polymer bzw. die Mischung thermoplastische oder destrukturierte Stärke enthält sowie als Plastifizier- oder Quellmittel bzw. als weiteres abbaubares Polymer ein Polyestercopolymer, erhältlich durch Polykondensation von einerseits mindestens einem Diol aus der Reihe 1,2-Ethandiol, 1,3- Propandiol, 1,4-Butandiol und/oder 1,6-Hexandiol mit andererseits mindestens einer aromatischen diCarbonsäure, und mindestens einer aliphatischen Di-Carbonsäure, aus der Gruppe Adipinsäure und/oder Sebacinsäure.

7. Verwendung nach einem der Ansprüche 1 bis 6, **dadurch gekennzeichnet, dass** das biologisch abbaubare Polymer bzw. die Mischung thermoplastische Stärke enthält sowie als Plastifizier- oder Quellmittel oder als weiteres abbaubares Polymer einen aliphatischen Polyester bzw. Copolyester, aus der Gruppe Polymilchsäure, Polyhydroxybuttersäure, Polyhydroxybenzoesäure, Polyhydroxybuttersäure-Hydroxyvaleriansäure-copolymer oder Polycaprolacton.

8. Verwendung nach einem der Ansprüche 1 bis 7, **dadurch gekennzeichnet, dass** das biologisch abbaubare Polymer bzw. die Mischung thermoplastische Stärke enthält sowie als Plastifizier- oder Quellmittel und/oder als weiteres, biologisch abbaubares Polymer mindestens ein Polymer der nachfolgenden Liste:
- oligomere Polyesteramide mit einem Molgewicht ab 300, vorzugsweise ab 1000, sowie polymere Polyesteramide ab 1000 mol/Gew., vorzugsweise über 10 000, erhältlich durch Synthese aus den nachfolgenden Monomeren:
Dialkohole aus der Gruppe Ethylenglykol, 1,4-Butandiol, 1,3-Propandiol, 1,6-Hexandiol, Diethylenglykol und/oder Dicarbonsäure aus der Gruppe Oxalsäure, Bernsteinsäure, Adipinsäure, auch in Form ihrer jeweiligen Ester (Methyl-, Ethyl- usw.)
und/oder Hydroxycarbonsäuren und Lactone und/oder Aminoalkohole aus der Gruppe Ethanolamin, Propanolamin und/oder cyclische Lactame aus der Gruppe Caprolactam oder Laurinlactam
und/oder -Aminocarbonsäuren
und/oder Mischungen (1:1 Salze) aus Dicarbonsäuren aus der Gruppe Adipinsäure, Bernsteinsäure und Diaminen aus der gruppe Hexamethylendiamin, Diaminobutan.

9. Verwendung nach einem der Ansprüche 1 bis 8, **dadurch gekennzeichnet, dass** das biologisch abbaubare Polymer bzw. die Mischung thermoplastische Stärke enthält, sowie ein Celluloseacetat, -propionat und/oder -butyrat oder ein Gemisch davon und/oder Celluloseester in Form eines Mischesters, bei dessen Herstellung als Veresterungskomponente ein Säuregemisch, mindestens zwei der nachfolgenden Karbonsäuren enthaltend, verwendet wird:
- Essigsäure
- Propansäure
- Buttersäure
- Valeriansäure.

10. Verwendung nach einem der Ansprüche 1 bis 9, **dadurch gekennzeichnet, dass** das biologisch abbaubare Polymer bzw. die Mischung thermoplastische Stärke enthält sowie mindestens ein Additiv, einen Zuschlagstoff einen Weichmacher, einen Stabilisator, ein Antiflammittel, ein weiteres biologisch abbaubares Biopolymer, aus der Gruppe Celluloseester, Cellulose, Polyhydroxybuttersäure, ein hydrophobes Protein, Polyvinylalkohol, Gelatine, Zein, Polysaccarid, Polylactid, Polyvinylacetat, Polyacrylat, ein en Zuckeralkohol, Schellack, Casein, ein Fettsäurederivat, Pflanzenfasern, Lecithin oder Chitosan.

11. Verwendung nach einem der Ansprüche 1 bis 10, **dadurch gekennzeichnet, dass** das biologisch abbaubare Polymer bzw. die Mischung Fasern Kreide, Kalk, Kaolin, Titandioxid, Pigmente Konservierungsmittel, Stabilisatoren, UV-Schutz und/oder die Oberflächenstruktur- und Eigenschaften-verändernde Hilfsmittel enthält.

12. Verwendung nach einem der Ansprüche 1 bis 11, **dadurch gekennzeichnet, dass** es sich um einen Artikel der nachfolgend aufgeführten Liste bzw. um Teile davon handelt:
- Gewehrmunition bzw. Artilleriemunition bzw. Munitionsteile davon, wie vorzugsweise Simulationsmunition, Übungspatronen, Manövermunition, Hülsen, Hüllen, Projektile, Patronenhülsen, Patronenkörper, Zünderhülsen, Treibstoffladungshülsen
- Feuerwerkskörper, -raketen, Knall- und Blitzkörper, Treibladhülsen dazu
- Nebelkörper, Farbrauchkörper und Leucht- und Signalmittel.

13. Verwendung nach Anspruch 12, **dadurch gekennzeichnet, dass** der Artikel erhältlich ist mittels Spritzgiessen des in einem der Ansprüche 1 bis 11 definierten, biologisch abbaubaren Polymeren oder Polymer-Mischungen.

14. Verwendung nach einem der Ansprüche 1 bis 11, **dadurch gekennzeichnet, dass** es sich dabei um eine Matte, eine Platte, einen Teppich, eine Folie oder ein Gitter handelt, vorgesehen zum Abdecken eines Untergrundes.

15. Verwendung nach einem der Ansprüche 1 bis 11, **dadurch gekennzeichnet, dass** es sich dabei um eine Faltstrasse, Faltfeststrasse, um Überfahrhilfen, Bodenmatten, Zelt- bzw. Campingmatten, Gehweghilfen, Gehwegmatten, Behelfsstrassen, Bodenplatten, Hilfsmatten für Gartenbau und auf Baustellen, Wegmatten in Nassgebieten und auf Golfplätzen und/oder um Bestandteile dazu handelt.

16. Verwendung nach einem der Ansprüche 1 bis 11, **dadurch gekennzeichnet, dass** die flächige Fahr- bzw. Gehhilfe oder Teile davon erhältlich ist mittels Spritzgiessen eines biologisch abbaubaren Polymers oder einer Mischung, definiert in einem der Ansprüche 1 bis 11.

17. Verwendung nach einem der Ansprüche 1 bis 11, **dadurch gekennzeichnet, dass** die flächige Fahr- oder Gehhilfe oder Teile davon erhältlich ist mittels Extrusion eines biologisch abbaubaren Polymers oder einer Mischung, definiert in einem der Ansprüche 1 bis 11.

## Claims

1. Use of at least one biologically degradable polymer or polymer mixture for production of at least parts of a consumable article in pyrotechnics or in military engineering or for the production of a least parts of a flat travel-surface aid or walking-surface aid for covering rough and/or waterlogged ground, **characterised in that** the biologically degradable polymer or mixture is obtained by mixing, in molten state, thermoplastic starch or derivatives thereof with at least one polymer component, which is based on natural monomers and obtained by biochemical polymerisation and which is selected from the group of polylactides, polyhydroxyl butyric acid and copolymers with valeric acid and/or fermentationally produced polyesters, and/or a polymer component, which is based on monomers on the basis of fossil fuels and is obtained by synthetic or chemical polymerisation and which is selected from the group of degradable polyesters and copolyesters, polyester amides, polyester urethanes, polyvinylalcohol, ethylenevinylalcohol and/or mixtures thereof, in which a water content of < 1 weight percent, wherein the thermoplastic starch is initially obtained from native starch or derivatives thereof by mixing, in molten state, with glycerol, glycerol acetate and/or sorbitol or another suitable low-molecular plasticiser, with a water content of < 5 weight percent.

2. Use according to claim 1, **characterised in that** the biologically degradable polymer or the mixture contains at least one of the following polymer components or is obtained by mixing, in molten state, thermoplastic starch or derivatives thereof with at least one of the following polymer components:
- an aliphatic polyester,
- a copolyester with aliphatic and aromatic blockers,
- a polyester amide
- polyvinylalcohol
- a polyester urethane,
- and/or mixtures thereof,
wherein the mixing with the starch has to take place a water content of < 1 weight percent and wherein the thermoplastic starch is initially obtained from native starch or derivatives thereof by mixing, in molten state, with glycerol, glycerol acetate and/or sorbitol or another suitable low-molecular plasticiser, with a water content of < 5 weight percent.

3. Use according to one of claims 1 and 2, **characterised in that** the biologically degradable polymer or the mixture contains gelatine, lignin, cellulose, derivatives of the aforesaid materials and/or mixtures thereof.

4. Use according to one of claims 1 to 3, **characterised in that** the biologically degradable polymer or the mixture contains at least one polymer from the following list:
aliphatic and partly aromatic polyester consisting of
A) linear bifunctional alcohols from the group ethylene glycol, hexanediol or butanediol, and/or cycloaliphatic bifunctional alcohols, and additionally small quantities of higher-functional alcohols, from the group 1,2,3-propanetriol and neopentyl glycol, as well as of linear bifunctional acids from the group succinic acid and adipic acid, and/or cycloaliphatic bifunctional acids, and/or aromatic bifunctional acids from the group terephthalic acid, isophthalic acid and naphthalene dicarboxylic acid, and small quantities of higher-functional acids, or
B) acid-functionalised and alcohol-functionalised elements from the group hydroxy butyric acid and hydroxy valeric acid or derivatives thereof,
or a mixture or a copolymer of A) and B),
wherein the aromatic acids make up not more than a 50 weight percent proportion referred to all acids;
aliphatic polyester urethane consisting of:
C) an ester component of linear bifunctional alcohols from the group ethylene glycol, butanediol, hexanediol, butanediol, and/or cycloaliphatic bifunctional alcohols, and small quantities of higher-functional alcohols from the group 1,2,3-propanetriol and neopentyl glycol, as well as of linear bifunctional acids from the group succinic acid and adipic acid, and/or cycloaliphatic and/or aromatic bifunctional acids from the group cyclohexane dicarboxylic acid and terephthalic acid, and small quantities of higher-functional acids, or
D) an ester component of acid-functionalised and alcohol-functionalised elements from the group hydroxy butyric acid and hydroxy valeric acid or derivatives thereof,
or a mixture or a copolymer of C) and D), and
E) the reaction product of C) and/or D) with aliphatic and/or cycloaliphatic bifunctional and higher-functional isocyanates from the group tetramethylene diisocyanate, hexamethylene diisocyanate, isophorone diisocyanate, optionally also with linear and/or cycloaliphatic bifunctional and/or higher-functional alcohols from the group ethylene glycol, butanediol, hexanediol, neopentyl glycol, cyclohexane dimethanol,
wherein the ester component C) and/or D) amounts to at least 75 weight percent referred to the sum of C), D), and E);
aliphatic/aromatic polyester carbonate consisting of
F) an ester component of linear bifunctional alcohols from the group ethylene glycol, butanediol, hexanediol, butanediol, and/or cycloaliphatic bifunctional alcohols, and small quantities of higher-functional alcohols from the group 1,2,3-propanetriol and neopentyl glycol, as well as of linear bifunctional acids from the group succinic acid and adipic acid, and/or cycloaliphatic bifunctional acids, and small quantities of higher-functional acids, or
G) an ester component of acid-functionalised and alcohol-functionalised elements from the group hydroxy butyric acid, hydroxy valeric acid and derivatives thereof,
or a mixture or a copolymer of F) and G), and
H) a carbonate component which is produced from aromatic bifunctional phenols and carbonate donors,
wherein the ester component F) and/or G) amounts to at least 70 weight percent referred to the sum of F), G), and H);
aliphatic polyester amide consisting of
I) an ester component of linear and/or cycloaliphatic bifunctional alcohols from the group ethylene glycol, hexanediol, butanediol, butanediol, cyclohexane dimethanol, and small quantities of higher-functional alcohols from the group 1,2,3-propanetriol and neopentyl glycol, as well as of linear and/or cycloaliphatic bifunctional acids from the group succinic acid, adipic acid, cyclohexane dicarboxylic acid, adipic acid, and small quantities of higher-functional acids, or
K) an ester component of acid-functionalised and alcohol-functionalised elements from the group hydroxy butyric acid, hydroxy valeric acid and derivatives thereof,
or a mixture or a copolymer of I) and K), and
L) an amide component of linear and/or cycloaliphatic bifunctional and small quantities of higher-functional amines from the group tetramethylene diamine, hexamethylene diamine, isophorone diamine, as well as linear and/or cycloaliphatic bifunctional and small quantities of higher-functional acids from the group succinic acid and adipic add, or
M) an amide component of acid-functionalised and amine-functionalised elements from the group ε-laurinlactam and ε-caprolactam,
or a mixture of L) and M) as amide component, wherein
the ester component I) and/or K) amounts to at least 30 weight percent referred to the sum of I), K), L) and M).

5. Use according to one of claims 1 to 4, **characterised in that** the biologically degradable polymer or the mixture contains at least one starch in the form of thermoplastic starch and, as plasticiser of or swelling agent for the starch, at least one polymer from the list according to claim 4.

6. Use according to one of claims 1 to 5, **characterised in that** the biologically degradable polymer or the mixture contains thermoplastic or destructured starch and, as plasticiser or swelling agent or as further degradable polymer, a polyester copolymer obtained by polycondensation of, on the one hand, at least one diol from the series 1,2-ethanediol, 1,3-propanediol, 1,4-butanediol and/or 1,6-hexanediol with, on the other hand, at least one aromatic dicarboxylic acid and at least one aliphatic dicarboxylic acid from the group adipic acid and/or sebacic acid.

7. Use according to one of claims 1 to 6, **characterised in that** the biologically degradable polymer or the mixture contains thermoplastic or destructured starch and, as plasticiser or swelling agent or as further degradable polymer, an aliphatic polyester or copolyester from the group of polylactic acid, polyhydroxy butyric acid, polyhydroxy benzoic acid, polyhydroxy-butyric-acid/hydroxy-valeric-acid copolymer and polycaprolactone.

8. Use according to one of claims 1 to 7, **characterised in that** the biologically degradable polymer or the mixture contains thermoplastic starch and, as plasticiser or swelling agent and/or as further degradable polymer, at least one polymer of the following list:
- oligomeric polyester amide with a mol/weight from 300, preferably from 1,000, as well as polymer polyester amide from 1,000 mol/weight, preferably above 10,000, obtained by synthesis from the following monomers:
dialcohols from the group ethylene glycol, 1,4,-butanediol, 1,3-propanediol, 1,6-hexanediol, diethylene glycol, and/or dicarboxylic acid from the group oxalic acid, succinic acid, adipic acid, also in the form of the respective esters thereof (methyl-, ethyl-, etc.), and/or hydroxycarboxylic acids and lactones, and/or amino alcohols from the group ethanol amine, propanol amine, and/or cyclic lactams from the group caprolactam and laurinlactam, and/or amino carboxylic acids, and/or mixtures (1:1 salts) of dicarboxylic acids from the group adipic acid, succinic acid, and diamines from the group hexamethylene diamine and diaminobutane.

9. Use according to one of claims 1 to 8, **characterised in that** the biologically degradable polymer or the mixture contains thermoplastic starch and a cellulose acetate, cellulose propionate and/or cellulose butyrate or a mixture thereof and/or cellulose esters in the form of a mixed ester, in the production of which there is used, as esterification component, an acid mixture containing at least two of the following carboxylic acids:
- ethanoic acid
- propionic acid
- butyric acid
- valeric acid.

10. Use according to one of claims 1 to 9, **characterised in that** the biologically degradable polymer or the mixture contains thermoplastic starch and at least one additive, loading substance, softener, stabiliser, flame-retarder, further biologically degradable biopolymer from the group cellulose ester, cellulose, polyhydroxy butyric acid, hydrophobic protein, polyvinylalcohol, gelatine, zein, polysaccaride, polylactide, polyvinylacetate, polyacrylate, sugar alcohol, shellac, casein, fatty acid derivative, plant fibres, lecithin and chitosan.

11. Use according to one of claims 1 to 10, **characterised in that** the biologically degradable polymer or the mixture contains fibres, chalk, lime, kaolin, titanium dioxide, pigments, preservatives, stabilisers, UV protective agents and/or adjuvants modifying surface structure and characteristics.

12. Use according to one of claims 1 to 11, **characterised in that** it comprises an article from the list set out in the following or parts thereof:
- rifle ammunition or artillery ammunition or ammunition parts thereof, such as preferably simulation ammunition, practice cartridges, manoeuvre munitions, shells, casings, projectiles, cartridge cases, cartridge bodies, fuse cases, propellant charge cases,
- firework bodies, firework rockets, cracker bodies and flash bodies, propulsive charge cases for that purpose
- smokescreen bodies, coloured-smoke bodies and illuminating and signalling means.

13. Use according to claim 12, **characterised in that** the article is obtained by means of injection moulding the biologically degradable polymers or polymer mixtures defined in one of claims 1 to 11.

14. Use according to one of claims 1 to 11, **characterised in that** it comprises a mat, a sheet, a carpet, a film or a mesh provided for covering a ground surface.

15. Use according to one of claims 1 to 11, **characterised in that** it comprises a folding road, a folding rigid road, travel-surface aids, ground mats, tent or camping mats, walking-surface aids, walking-surface mats, temporary roads, ground sheets, auxiliary mats for landscaping and at building sites, foot mats in wet regions and on golf courses and/or components for those purposes.

16. Use according to one of claims 1 to 11, **characterised in that** the flat travel-surface aid or walking-surface aid or parts thereof is or are obtained by injection moulding a biologically degradable polymer or mixture defined in one of claims 1 to 11.

17. Use according to one of claims 1 to 11, **characterised in that** the flat travel-surface aid or walking-surface aid or parts thereof is or are obtained by extrusion of a biologically degradable polymer or mixture defined in one of claims 1 to 11.

## Revendications

1. Utilisation d'un polymère ou d'un mélange de polymères dégradables biologiquement pour la fabrication au moins de pièces d'un article d'usure en pyrotechnie ou dans la technique militaire ou pour la fabrication au moins de parties d'une aide à la circulation par véhicule ou au passage à pied pour le recouvrement d'un substrat imperméable et/ou humide,
**caractérisée en ce que**
le polymère ou le mélange dégradable biologiquement est accessible par mélange à l'état fondu d'amidons thermoplastiques ou de dérivés de ceux-ci avec au moins un composant polymère qui est à base de monomères naturels et qui est accessible par polymérisation biochimique, choisis dans le groupe des polylactides, des acides polyhydroxybutyriques ainsi que des copolymères avec l'acide valérianique et/ou des polyesters produits par fermentation, et/ou avec un composant polymère qui est formé à base de matières premières fossiles et qui est accessible par polymérisation synthétique ou chimique choisi dans le groupe des polyesters et des copolyesters dégradables, des polyesteramides, des polyesteruréthanes, de l'alcool polyvinylique, de l'alcool éthylènevinylique, et/ou avec des mélanges de ceux-ci, pour une teneur en eau < 1 % en poids, l'amidon thermoplastique étant accessible en premier lieu à partir d'amidon naturel ou de dérivés de celui-ci par mélange à l'état fondu avec du glycérol, de l'acétate de glycéryle et/ou du sorbitol ou d'un autre agent plastifiant approprié à bas poids moléculaire, avec une teneur en eau < 5 % en poids.

2. Utilisation selon la revendication 1,
**caractérisée en ce que**
le polymère ou le mélange biologiquement dégradable contient au moins un des composants polymères suivants, ou est accessible par mélange à l'état fondu d'amidons thermoplastiques ou de dérivés de ceux-ci avec au moins un des composants polymères suivants :
- un polyester aliphatique
- un copolyester ayant des blocs aliphatiques et aromatiques
- un polyesteramide
- l'alcool polyvinylique
- un polyesteruréthane
et/ou
- des mélanges de ceux-ci,
dans laquelle le mélange avec l'amidon doit s'effectuer avec une teneur en eau < 1 % en poids et dans laquelle l'amidon thermoplastique est accessible en premier lieu à partir d'amidon naturel ou de dérivés de celui-ci par mélange à l'état fondu, avec du glycérol, de l'acétate de glycéryle et/ou du sorbitol ou avec un autre agent plastifiant approprié à bas poids moléculaire, avec une teneur en eau < 5 % en poids.

3. Utilisation selon l'une quelconque des revendications 1 ou 2,
**caractérisée en ce que**
le polymère ou le mélange biologiquement dégradable contient en outre de la gélatine, de la lignine, de la cellulose, des dérivés des produits précités et/ou des mélanges de ceux-ci.

4. Utilisation selon l'une quelconque des revendications 1 à 3,
**caractérisée en ce que**
le polymère ou le mélange biologiquement dégradable contient au moins un polymère choisi dans l'énumération suivante :
- polyesters aliphatiques et partiellement aromatiques à partir :
A) d'alcools linéaires bifonctionnels choisis dans le groupe de l'éthylèneglycol, de l'hexanediol, ou du butanediol et/ou les alcools bifonctionnels cycloaliphatiques et en supplément de petites quantités d'alcools de fonctionnalité plus élevée choisis dans le groupe du 1,2,3-propanetriol ou du neopentylglycol ainsi que parmi les acides linéaires pentylglycol ainsi que parmi les acides linéaires bifonctionnels choisis dans le groupe de l'acide succinique ou de l'acide adipique et/ou des acides bifonctionnels cycloaliphatiques et/ou des acides bifonctionnels aromatiques choisis dans le groupe de l'acide téréphtalique, de l'acide isophtalique, de l'acide naphtalène dicarboxylique et de faibles quantités d'acides à fonctionnalité plus élevée, ou
B) des éléments constitutifs fonctionnalisés par un acide et par un alcool choisi dans le groupe de l'acide hydroxybutyrique ou de l'acide hydroxyvalérianique ou de leurs dérivés ou
- d'un mélange ou d'un copolymère à base de A et de B, les acides aromatiques ne représentant pas plus de 50 % en poids rapporté à tous les acides,
- des polyesteruréthanes aliphatiques à partir,
C) d'une fraction d'esters choisie parmi les alcools bifonctionnels linéaires choisis dans le groupe de l'éthylèneglycol, du butanediol, de l'hexanediol, du butanediol, et/ou des alcools bifonctionnels cycloaliphatiques et de petites quantités d'alcools de fonctionnalité plus élevée choisis dans le groupe du 1,2,3-propanediol ou du neopentylglycol ainsi que des acides bifonctionnels linéaires choisis dans le groupe de l'acide succinique ou de l'acide adipique et/ou des acides bifonctionnels cycloaliphatiques et/ou aromatiques choisis dans le groupe de l'acide cyclohexane dicarboxylique et de l'acide téréphtalique et de faibles quantités d'acides à fonctionnalité plus élevée, ou
D) d'une fraction d'ester choisis parmi les éléments constitutifs fonctionnalisés par un acide et un alcool choisis dans le groupe de l'acide hydroxybutyrique et de l'acide hydroxyvalérianique, ou de leurs dérivés,
ou d'un mélange ou d'un copolymère à base de C) et de D) et,
E) d'un produit de réaction de C) et/ou de D) avec des isocyanates aliphatiques et/ou cycloaliphatiques bifonctionnels et d'une fonctionnalité plus élevée, choisis dans le groupe du tétraméthylènediisocyanate, de l'héxaméthylènediisocyanate, de l'isophoronediisocyanate, le cas échéant en supplément avec des alcools linéaires et/ou cycloaliphatiques bifonctionnels et/ou de fonctionnalité plus élevée choisis dans le groupe de l'éthylèneglycol, du butanediol, de l'hexanediol, du néopentylglycol et du cyclohexanediméthanol,
dans lequel la fraction ester C) et/ou D) s'élève à au moins 75 % en poids rapporté à la somme de C), D) et E),
- des polyestercarbonates aliphatiques-aromatiques à base de
F) une fraction ester à base d'alcools bifonctionnels linéaires choisis dans le groupe de l'éthylèneglycol, du butanediol, de l'hexanediol, du butanediol, et/ou des alcools bifonctionnels cycloaliphatiques et de faibles quantités d'alcools de fonctionnalité plus élevée choisis dans le groupe du 1,2,3-propanetriol ou du néopentylglycol ainsi qu'à base d'acides bifonctionnels linéaires choisis dans le groupe de l'acide succinique ou de l'acide adipique et/ou des acides cycloaliphatiques bifonctionnels et de faibles quantités d'acides de fonctionnalité plus élevée, ou
G) à base d'une fraction ester à base d'éléments constitutifs fonctionnalisés par un acide et par un alcool choisis dans le groupe de l'acide hydroxybutyrique ou de l'acide hydroxyvalérianique ou de leurs dérivés, ou
d'un mélange ou d'un copolymère à base de F) et de G), et
H) d'une fraction carbonate qui est préparée à partir de phénols bifonctionnels aromatiques et de donneurs de carbonate, dans lesquels la fraction ester F) et/ou G) s'élève à au moins 70 % en poids rapporté à la somme de F), G) et H),
- des polyesteramides aliphatiques à base de
I) une fraction ester à base d'alcools bifonctionnels linéaires et/ou cycloaliphatiques choisis dans le groupe de l'éthylèneglycol, de l'hexanediol, du butanediol, du cyclohexanediméthanol, et de faibles quantités d'alcools de fonctionnalité plus élevée choisis dans le groupe du 1,2,3-propanetriol ou du néopentylglycol, ainsi que parmi les acides bifonctionnels linéaires et/ou cycloaliphatiques choisis dans le groupe de l'acide succinique, de l'acide adipique, de l'acide cyclohexanedicarboxylique, et de faibles quantités d'acides de fonctionnalité plus élevée, ou
K) à base d'une fraction ester à base d'éléments constitutifs fonctionnalisés par un acide et par un alcool choisis dans le groupe de l'acide hydroxybutyrique ou de l'acide hydroxyvalérianique ou de leurs dérivés, ou
- à base d'un mélange ou d'un copolymère à base de I) et de K), et
L) d'une fraction amide à base d'amines linéaires et/ou cycloaliphatiques bifonctionnelles et de faibles quantités d'amines de fonctionnalité plus élevée choisies dans le groupe de la tétraméthylènediamine, de l'hexaméthylènediamine, de l'isophoronediamine, ainsi qu'à base d'acides linéaires et/ou cycloaliphatiques bifonctionnels et de faibles quantités d'acides de fonctionnalité plus élevée choisis dans le groupe de l'acide succinique ou de l'acide adipique, ou
M) à base d'une fraction amide choisis parmi les éléments constitutifs fonctionnalisés par un acide et par une amine choisis dans le groupe du Σ-lactame laurique et du Σ-caprolactame ou
- d'un mélange à base de L) et de M) comme fraction amide dans lequel, la fraction ester I) et/ou K) s'élève à au moins 30 % en poids rapporté à la somme de I), de K), de L) et de M).

5. Utilisation selon l'une quelconque des revendications 1 à 4,
**caractérisée en ce que**
le polymère ou le mélange biologiquement dégradable, contient au moins des amidons sous forme d'amidon thermoplastique et comme agent plastifiant ou agent gonflant de l'amidon, au moins un polymère provenant de l'énumération conformément à la revendication 4.

6. Utilisation selon l'une quelconque des revendications 1 à 5,
**caractérisée en ce que**
le polymère ou le mélange biologiquement dégradable renferme des amidons thermoplastiques ou déstructurés, ainsi que comme agent plastifiant ou agent gonflant ou comme autre polymère dégradable, un copolymère de polyester accessible par polycondensation de, d'une part, au moins un diol choisi dans la série du 1,2-éthanediol, 1,3-propanediol, 1,4-butanediol et/ou 1,6-hexanediol avec d'autre part, au moins un acide dicarboxylique aromatique, et au moins un acide dicarboxylique aliphatique choisi dans le groupe de l'acide adipique et/ou de l'acide sébacique.

7. Utilisation selon l'une quelconque des revendications 1 à 6,
**caractérisée en ce que**
le polymère ou le mélange biologiquement dégradable renferme des amidons thermoplastiques ainsi que comme agent plastifiant ou comme agent gonflant, ou comme autre polymère dégradable, un polyester aliphatique ou un copolyester choisi dans le groupe de l'acide polylactique, de l'acide polyhydroxybutyrique, de l'acide polyhydroxybenzoïque, du copolymère acide polyhydroxybutyrique-acide hydroxyvalérianique ou de la polycaprolactome.

8. Utilisation selon l'une quelconque des revendications 1 à 7,
**caractérisée en ce que**
le polymère ou le mélange biologiquement dégradable renferme des amidons thermoplastiques ainsi que comme agent plastifiant ou comme agent gonflant et/ou comme autre polymère biologiquement dégradable, un polymère de la liste suivante :
- des polyesteramides oligomères ayant un poids molaire à partir de 300, de préférence à partir de 1 000, ainsi que des polyesteramides polymères à partir de 1 000 mol poids, de préférence au-delà de 10 000, accessibles par synthèse à partir des monomères suivants :
- des dialcools, choisis dans le groupe de l'éthylèneglycol, du 1,4-butanediol, du 1,3-propanediol, du 1,6-hexanediol, du diéthylèneglycol.
et/ou d'acides dicarboxyliques choisis dans le groupe de l'acide oxalique, de l'acide succinique, de l'acide adipique, également sous forme de leurs esters respectifs (méthyle, éthyle, etc...)
et/ou des acides hydroxycarboxyliques et des lactones et/ou d'aminoalcools choisis dans le groupe de l'éthanolamine, de la propanolamine,
et/ou des lactames cycliques choisis dans le groupe du caprolactame
ou du lactame laurique et/ou des acides amino carboxyliques
et/ou des mélanges (sel 1:1) à base d'acides dicarboxyliques choisis dans le groupe de l'acide adipique, de l'acide succinique, et des diamines choisies dans le groupe de l'hexaméthylènediamine et du diaminobutane.

9. Utilisation selon l'une quelconque des revendications 1 à 8,
**caractérisée en ce que**
le polymère ou le mélange biologiquement dégradable, contient des amidons thermoplastiques ainsi qu'un acétate, un propionate, et/ou un butyrate de cellulose ou un mélange de ceux-ci, et/ou un ester de cellulose sous forme d'un ester mixte, pour la préparation duquel on utilise comme composant pour l'estérification, un mélange d'acides contenant au moins deux des acides carboxyliques suivants :
- acide acétique
- acide propanoïque
- acide butyrique
- acide valérianique.

10. Utilisation selon l'une quelconque des revendications 1 à 9,
**caractérisée en ce que**
le polymère ou le mélange biologiquement dégradable renferme des amidons thermoplastiques ainsi qu'au moins un additif, une substance d'addition, un agent plastifiant, un agent stabilisant, un agent antiinflammatoire, un autre biopolymère dégradable biologiquement choisi dans le groupe des esters de cellulose, de la cellulose, de l'acide polyhydroxybutyrique, une protéine hydrophobe, l'alcool polyvinylique, la gélatine, la zeïne, un polysaccharide, un polylactide, l'acétate de polyvinyle, un polyacrylate, un alcool de sucre, la gomme laque, la caséine, un dérivé d'acide gras, des fibres végétales, de la lécithine ou du chitosan.

11. Utilisation selon l'une quelconque des revendications 1 à 10,
**caractérisée en ce que**
le polymère ou le mélange biologiquement dégradable renferme des fibres, de la craie, de la chaux, du kaolin, du dioxyde de titane, des pigments, des agents de conservation, des agents stabilisants, des agents de protection contre les UV et/ou des agents adjuvants qui modifient la structure des surfaces et les propriétés.

12. Utilisation selon l'une quelconque des revendications 1 à 11,
**caractérisée en ce qu'**
il s'agit d'un article de la liste exposée ci-après ou des pièces de celui-ci :
- munitions de défense ou munitions d'artillerie ou pièces de munitions de ceux-ci, comme de préférence munitions de simulation, cartouches d'exercice, munitions de manoeuvre, des douilles, des étuis, des projectiles, des douilles de cartouche, des corps de cartouche, des douilles d'amadou, des douilles de charge de propulseur,
- des pièces de feu d'artifice, de pièces de fusée, de corps fulminant et de corps d'éclatement, de douilles de charge de propulsion pour cela,
- des solides fumigènes, des fumigènes colorés, et des agents lumineux et de signalisation.

13. Utilisation selon la revendication 12,
**caractérisée en ce que**
l'article est accessible à l'aide de coulée par injection du polymère ou des mélanges de polymères dégradables biologiquement définis dans l'une quelconque des revendications 1 à 11.

14. Utilisation selon l'une quelconque des revendications 1 à 11,
**caractérisée en ce qu'**
il s'agit d'une natte, d'une plaque, d'un tapis, d'une feuille, ou d'un treillis, prévu pour recouvrir un substrat.

15. Utilisation selon l'une quelconque des revendications 1 à 11,
**caractérisée en ce qu'**
il s'agit de piste pliante, de piste plissée, d'auxiliaire de passage, de nattes pour le sol, de nattes pour tentes ou pour le camping, d'auxiliaires de voies à pied, de paillassons pour le passage à pied, des routes provisoires, de plaques de sol, de paillassons pour le jardinage et les chantiers, des nattes de voies dans des zones humides et sur des parcours de golf et/ou comme constituants pour cela.

16. Utilisation selon l'une quelconque des revendications 1 à 11,
**caractérisée en ce que**
l'auxiliaire de surface de circulation ou de marche à pied ou ses parties est accessible par coulée par injection d'un polymère ou d'un mélange biologiquement dégradable tel que défini dans l'une quelconque des revendications 1 à 11.

17. Utilisation selon l'une quelconque des revendications 1 à 11,
**caractérisée en ce que**
l'auxiliaire de surface de circulation ou de marche à pied ou ses parties est accessible par extrusion d'un polymère ou d'un mélange biologiquement dégradable tel que défini dans l'une quelconque des revendications 1 à 11.
